# EUROPÄISCHE PATENTSCHRIFT

(11) **EP 2 145 812 B1**
(45) Veröffentlichungstag und Bekanntmachung des Hinweises auf die Patenterteilung: **16.11.2011**
(21) Anmeldenummer: 09008469.0
(22) Anmeldetag: 29.06.2009
(51) Int. Cl.: B62D 5/04

(54) **Verfahren zur Steuerung einer Lenkvorrichtung für ein Flurförderzeug**
Method of controlling a steering device for an industrial truck
Procédé de commande d'un dispositif de direction pour un chariot de manutention

(30) Priorität: 16.07.2008 DE 102008033389
(43) Veröffentlichungstag der Anmeldung: 20.01.2010
(73) Patentinhaber: STILL GmbH, 22113 Hamburg (DE)
(72) Erfinder: Rudolph, Christian, 21075 Hamburg (DE); Bierhoff, Michael, 22081 Hamburg (DE)
(74) Vertreter: Geirhos, Johann

(56) Entgegenhaltungen:
- WO-A2-2007/072025
- DE-A1- 19 625 350
- US-A- 5 701 066
- US-B1- 6 456 946

## Beschreibung

Die Erfindung betrifft ein Verfahren zur Steuerung einer Lenkvorrichtung für ein Flurförderzeug und eine Lenkvorrichtung für ein Flurförderzeug. Insbesondere betrifft die Erfindung ein Verfahren zur Steuerung einer Lenkvorrichtung für ein Flurförderzeug, die einen Lenkgeber, mindestens ein mit einer Fahrbahn in Kontakt stehendes gelenktes Rad, einen Drehstrommotor zum Verdrehen des gelenkten Rades, einen regelbaren Umrichter für die Versorgung des Drehstrommotors mit elektrischer Energie, Statorstromsensoren zur Messung der Statorströme des Drehstrommotors, und einen Spannungssensor zur Messung einer Eingangsspannung des Umrichters aufweist.

Neben einer hydraulischen Lenkung ist bei Flurförderzeugen eine elektrische Lenkung bekannt, bei der die Übertragung der Lenkbefehle zwischen einem Lenkgeber, wie etwa einem Lenkrad, und einem gelenkten Rad nur per Draht und nicht über eine mechanische Verbindung erfolgt. Bei diesen bekannten elektrischen Lenkungen werden in dem Lenkgeber Lenkbefehlsignale erzeugt und durch eine Steuerung ein Lenkmotor angesteuert. Der Lenkmotor wirkt über ein Getriebe oder eine Kette auf eine Drehachse des gelenkten Rades ein und bestimmt dessen Einschlagswinkel durch Verdrehen des Rades.

Bekannt ist weiter, dass die Regelung des Lenkeinschlagswinkels durch die Steuerung mithilfe einer kaskadierten Regelstruktur erfolgt. Dabei werden drei Regelkreise ineinander verschachtelt. Den für die Regelung eines Elektromotors üblichen Regelungen für Strom und Drehzahl wird bei dem Lenkmotor noch eine Lageregelung überlagert.

Für den Lenkmotor kann man eine bürstenlose Gleichstrommaschine einsetzen. Diese benötigt allerdings einen Positionsgeber auf der Motorwelle, um die Kommutierungslage zu ermitteln. Günstiger ist der Einsatz einer Drehstrom-Asynchronmaschine als Lenkmotor. Bei einer Drehstrom-Asynchronmaschine ist bekannt, eine feldorientierte Regelung einzusetzen. Dabei wird jedoch auch noch ein Drehzahlsensor für die Messung der Drehzahl eingesetzt. Der für eine Drehstrom-Asynchronmaschine benötigte Drehstrom wird dabei über Halbleiter-Umrichter erzeugt.

Nachteilig an diesem Stand der Technik ist, dass die Betriebsbedingungen für einen Drehzahlsensor ungünstig sind und es daher relativ häufig zu Ausfällen kommt. Der Drehzahlsensor ist starken mechanischen Beanspruchungen, insbesondere Erschütterungen, und auch thermischen Belastungen ausgesetzt.

Aus der DE 10 2006 035863 A1 ist eine Lenkvorrichtung für ein Flurförderzeug mit einem Lenkgeber, der beispielsweise als Lenkrad ausgeführt ist, mindestens einem mit einer Fahrbahn in Kontakt stehenden gelenkten Rad und einem elektrischen Lenkmotor zum Bewegen des mindestens einen gelenkten Rads bekannt. Ein Radsensor erfasst eine Lenkstellung und/oder eine Lenkbewegung des gelenkten

Rads und eine elektronische Steuervorrichtung steht mit dem Lenkgebersensor, dem Radsensor und dem elektrischen Lenkmotor in Wirkverbindung.

Das Document DE-A-196 25 350 offenbart ebenfalls en Verfahren zur steuerung einer Lenkvorrichtung.

Der vorliegenden Erfindung liegt die Aufgabe zugrunde, den störanfälligen Drehzahlsensor bei einer elektrischen Lenkung zu vermeiden und dennoch eine genaue Regelung des Lenkmotors zu ermöglichen.

Die Aufgabe wird durch ein Verfahren zur Steuerung einer Lenkvorrichtung für ein Flurförderzeug mit den Merkmalen des unabhängigen Anspruch 1 sowie eine Lenkvorrichtung für ein Flurförderzeug mit den Merkmalen des Anspruchs 6 gelöst Vorteilhafte Weiterbildungen werden in den Unteransprüchen angegeben.

Vorteilhaft bestimmt bei einem Verfahren zur Steuerung einer Lenkvorrichtung für ein Flurförderzeug wobei die Lenkvorrichtung einen Lenkgeber, der beispielsweise als Lenkrad ausgeführt ist, mindestens ein mit einer Fahrbahn in Kontakt stehendes gelenktes Rad, einen Drehstrommotor zum Verdrehen des gelenkten Rads, einen regelbaren Umrichter für die Versorgung des Drehstrommotors mit elektrischer Energie, Statorstromsensoren zur Messung der Statorströme des Drehstrommotors, einen Spannungssensor zur Messung einer Eingangsspannung des Umrichters und eine Steuervorrichtung aufweist, die in Wirkverbindung mit dem Lenkgeber, dem Umrichter, den Statorstromsensoren und dem Spannungssensor steht, die Steuervorrichtung anhand einer Modellrechnung des Betriebsverhaltens des Drehstrommotors den Flussvektor und die Drehzahl des Drehstrommotors aus den Statorströmen und der Eingangsspannung.

Dadurch kann vorteilhaft die Anzahl der Komponenten der Lenkvorrichtung reduziert werden. Die Zuverlässigkeit wird erhöht, es werden Kosten vermieden sowie die Konstruktion wird insgesamt vereinfacht. Für die Umsetzung der erfindungsgemäßen Lösung kann die oft ohnehin schon vorhandene Umrichtertechnologie eingesetzt werden, sodass die erfindungsgemäße Lösung zum Großteil durch Software umgesetzt werden kann, ohne dass Mehrkosten für zusätzliche Bauteile entstehen. Der Drehzahlsensor, der rauen mechanischen Betriebsbedingungen und hohen thermischen Belastungen ausgesetzt ist, kann eingespart werden. Dadurch entstehen geringere Kosten für die Lenkvorrichtung und es kann das Bauvolumen verringert werden. Auch vereinfacht sich die Verkabelung und Montage der Lenkvorrichtung. Durch eine Verringerung der Anzahl der Bauteile ist prinzipiell auch eine bessere Zuverlässigkeit der Lenkvorrichtung zu erwarten.

Bei Statorfrequenzen im Bereich um 0 wird vorteilhaft ein niederfrequentes Testsignal dem Drehstrommotor zugeleitet und aus diesem Testsignal wird die Drehzahl bestimmt

Durch den Einsatz eines niederfrequenten Testsignals wird die Entstehung von Geräuschen in Stator und Rotor des Drehstrommotors vermieden, die z.B. beim alternativ möglichen Einsatz eines Hochfrequenztestsignals auftreten kann.

In günstiger Ausführungsform ist der Drehstrommotor ein Asynchron-Drehstrommotor.

In vorteilhafter Ausführungsform erfasst ein Lagegeber den Lenkeinschlag des verdrehten Rades und die Steuervorrichtung regelt anhand des erfassten Istwerts des Lenkeinschlags und des Sollwerts des Lenkgebers die Verdrehung des Rades.

Vorteilhaft wird aus dem errechneten Drehzahlwert über ein Integrationsglied ein errechneter Lagewert gebildet, der mit dem erfassten Lagewert verglichen wird und anhand der Differenz erfolgt eine Überprüfung der Korrektheit der Steuerung der Lenkvorrichtung.

Aus Sicherheitsgründen wird bei einer elektrischen Lenkung eine Redundanz des Systems gefordert. Durch die Modellrechnung und der aus dieser errechneten Drehzahl des Drehstrommotors kann über eine Integration ein Lagewert für die Verdrehung des Rades entsprechend dem Lenkeinschlag errechnet werden. Als redundanter Wert steht der durch den Lagegeber erfasste Lagewert zur Verfügung. Die Differenz zwischen beiden Werten sollte möglichst 0 sein und ermöglicht die redundante Überwachung und Regelung der Verdrehung des Rades durch die Steuervorrichtung, wenn durch den Lenkgeber, insbesondere ein Lenkrad eine Verdrehung des Rades vorgegeben wird. Auch wird durch den Lagegeber eine Korrektur der Modellrechnung, gegebenenfalls periodisch durchgeführt, möglich, wenn die Modellrechnung mit der Zeit zu sich aufsummierenden, verbleibenden Fehlern führt.

Vorteilhaft führt bei einer Lenkvorrichtung für ein Flurförderzeug mit einem Lenkgeber, der beispielsweise als Lenkrad ausgeführt ist, wobei die Lenkvorrichtung mindestens ein mit einer Fahrbahn in Kontakt stehendes gelenktes Rad, einen Drehstrommotor zum Verdrehen des gelenkten Rads, einen regelbaren Umrichter für die Versorgung des Drehstrommotors mit elektrischer Energie, Statorstromsensoren zur Messung der Statorströme des Drehstrommotors, einen Spannungssensor zur Messung einer Eingangsspannung des Umrichters und eine Steuervorrichtung aufweist, die in Wirkverbindung mit dem Lenkgeber, dem Umrichter, den Statorstromsensoren und dem Spannungssensor steht, die Steuervorrichtung ein zuvor beschriebenes Verfahren durch.

Vorteilhaft kann dabei ein Lagegeber den Lenkeinschlag des verdrehten Rades erfassen.

Weitere Vorteile und Einzelheiten der Erfindung werden anhand der in den schematischen Figuren dargestellten Ausführungsbeispiele näher erläutert. Hierbei zeigt
- Fig. 1: schematisch in Seitenansicht einen Gegengewichtsgabelstapler mit einer erfindungsgemäßen Lenkvorrichtung,
- Fig. 2: aschematisch eine erfindungsgemäße Lenkvorrichtung,
- Fig. 3: ein Regelungsschema eines Verfahrens zur Steuerung einer Lenkvorrichtung nach dem Stand der Technik und
- Fig. 4: ein Regelungsschema eines erfindungsgemäßen Verfahrens zur Steuerung einer Lenkvorrichtung.

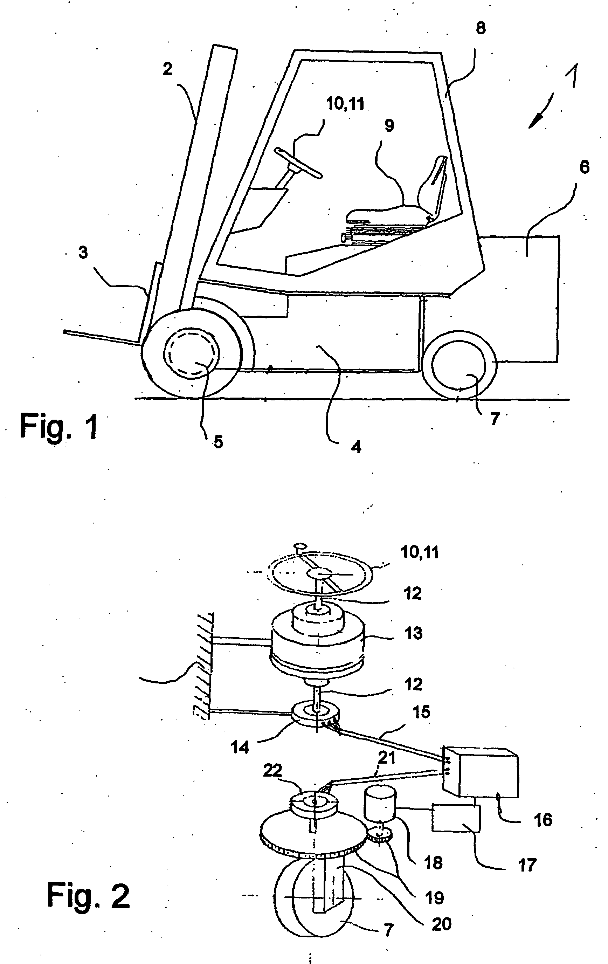

Die Fig. 1 zeigt schematisch in Seitenansicht einen Gegengewichtsgabelstapler 1 mit einer erfindungsgemäßen Lenkvorrichtung. An einem Hubgerüst 2 ist eine Lastgabel 3 angeordnet. An einem Rahmen 4 sind vordere Räder 5 und unterhalb eines Gegengewichts 6 ein gelenktes Rad 7 angeordnet. Das erfindungsgemäße Verfahren kann sowohl bei Dreiradstaplern, als auch bei Vierradstaplern eingesetzt werden. In einer Fahrerkabine 8 ist ein Fahrersitz 9 angeordnet und vor diesem ein Lenkgeber 10, hier in Form eines Lenkrades 11.

Die Fig. 2 zeigt schematisch eine erfindungsgemäße Lenkvorrichtung des Gegengewichtgabelstaplers 1 aus der Fig. 1. Zu erkennen ist der von dem Lenkrad 11 gebildeter Lenkgeber 10, eine Lenkwelle 12, eine Lagerung 13 an der Fahrerkabine 8 und ein Lenkgebersensor 14. Der Lenkgebersensor 14 erfasst die Winkelstellung der Lenkwelle 12 und gibt ein entsprechendes Signal über eine Signalleitung 15 an eine Steuervorrichtung 16 ab. Die Steuervorrichtung steuert einen Umrichter 17 an, der aus einem nicht dargestellten Gleichspannungszwischenkreis eine Eingangsspannung bezieht und die Statorwicklungen eines Drehstrommotors 18 mit Strom versorgt, der von ebenfalls nicht dargestellten Statorstromsensoren gemessen wird. Der Drehstrommotor 18 verdreht über ein Zahnradgetriebe 19 das an einem Drehschemel 20 angeordnete gelenkte Rad 7. Anstelle eines Zahnradgetriebes 19 kann auch ein Kettengetriebe oder ein Riemengetriebe eingesetzt werden. Über eine weitere Signalleitung 21 ist die Steuervorrichtung 16 mit einem Lagegeber 22 verbunden, der die absolute Drehung des Rades 7 erfasst.

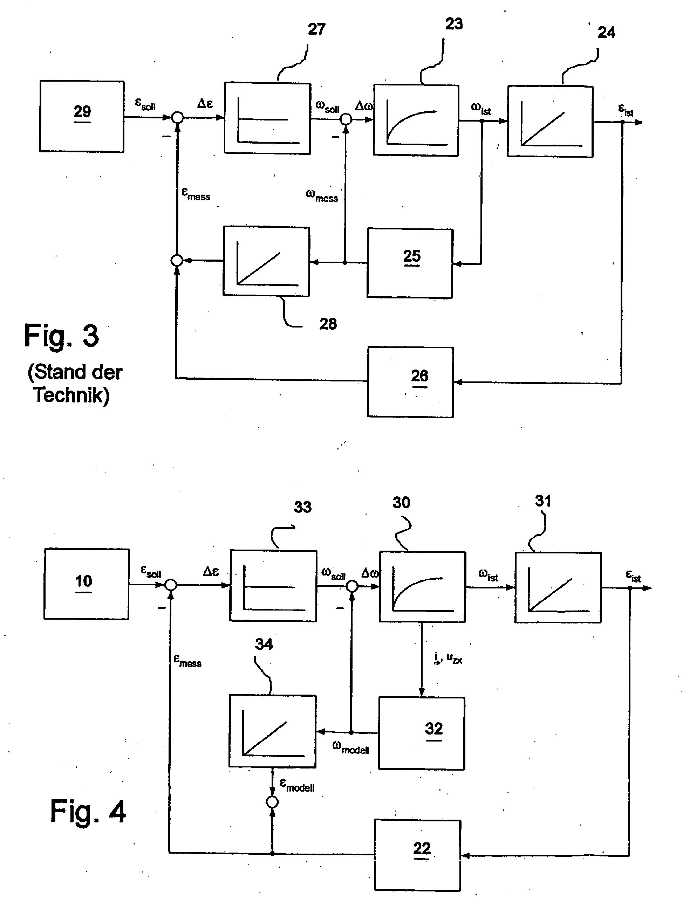

Fig. 3 zeigt ein Regelungsschema eines Verfahrens zur Steuerung einer Lenkvorrichtung nach dem Stand der Technik. In einem Drehzahlregelkreis wird über ein PT1 -Glied 23 als Regelstrecke ein Drehstrommotor eines Lenkantriebs angesteuert, der in Bezug auf die sich aus der Ansteuerung ergebende Lage wie ein Integrationsglied 24 wirkt. Der Istwert der Drehzahlregelung wird durch einen Drehzahlgeber 25 bestimmt. Der Drehzahlregelung ist eine redundante Positionsregelung überlagert, die aus einem Lagegeber 26 den Istwert der Lage des gedrehten, bzw. gelenkten Rades oder der Räder erhält. Über ein Proportionalglied 27 steuert die überlagerte Positionsregelung die Drehzahlregelung an. Die Drehzahlregelung erfolgt dabei als feldorientierte Drehzahlregelung. Zur Initialisierung erfolgt ein Abgleich zwischen Lageregelung und Drehzahlregelung über ein Integrationsglied 28. Die Regelung wird insgesamt von einem Lenkgeber 29 angesteuert.

Fig. 4 zeigt ein Regelungsschema eines erfindungsgemäßen Verfahrens zur Steuerung einer Lenkvorrichtung. In einem Drehzahlregelkreis wird über ein PT1 -Glied 30 als Regelstrecke der Drehstrommotor 18 des Lenkantriebs angesteuert, der in Bezug auf die sich aus der Ansteuerung ergebende Lage wie ein Integrationsglied 31 wirkt. Der Istwert, die Drehzahl ωᵢₛₜ der Drehzahlregelung wird durch eine Modellrechnung 32 errechnet. Der Drehzahlregelung ist eine redundante Positionsregelung überlagert, die aus dem Lagegeber 22 den Istwert der Lage des gedrehten, bzw. gelenkten Rades 7 erhält. Über ein Proportionalglied 33 steuert die überlagerte Positionsregelung die Drehzahlregelung an. Die Drehzahlregelung erfolgt dabei als feldorientierte Drehzahlregelung ohne Drehzahlgeber. Für einen Abgleich und um Redundanz zu erreichen wird aus der errechneten Drehzahl ωᵢₛₜ über ein Integrationsglied 34 ein errechneter Lagewert ε_{Modell} mit dem Messwert des Lagegebers 22 verglichen. Die Regelung wird insgesamt von dem Lenkgeber 10 angesteuert.

Das beschriebene Verfahren zur Steuerung einer Lenkvorrichtung kann auch bei anderen Drehstromantrieben bei einem Flurförderzeug eingesetzt werden.

## Patentansprüche

1. Verfahrens zur Steuerung einer Lenkvorrichtung für ein Flurförderzeug wobei die Lenkvorrichtung einen Lenkgeber(10), der beispielsweise als Lenkrad (11) ausgeführt ist, mindestens ein mit einer Fahrbahn in Kontakt stehendes gelenktes Rad (7), einen Drehstrommotor (18) zum Verdrehen des gelenkten Rads (7), einen regelbaren Umrichter (17) für die Versorgung des Drehstrommotor (18) mit elektrischer Energie, Statorstromsensoren zur Messung der Statorströme des Drehstrommotors (18), einen Spannungssensor zur Messung einer Eingangsspannung des Umrichters (17) und eine Steuervorrichtung (16) aufweist, die in Wirkverbindung mit dem Lenkgeber (10), dem Umrichter (17), den Statorstromsensoren und dem Spannungssensor steht, wobei bei dem Verfahren die Steuervorrichtung (16) anhand einer Modellrechnung des Betriebsverhaltens des Drehstrommotors (18) den Flussvektor und die Drehzahl (ωᵢₛₜ) des Drehstrommotors (18) aus den Statorströmen und der Eingangsspannung bestimmt.

2. Verfahren nach Anspruch 1,
**dadurch gekennzeichnet,**
**dass** bei Statorfrequenzen im Bereich um 0 ein niederfrequentes Testsignal dem Drehstrommotor (19) zugeleitet wird und aus diesem Testsignal die Drehzahl (ωᵢₛₜ) bestimmt wird.

3. Verfahren nach Anspruch 1 oder 2,
**dadurch gekennzeichnet,**
**dass** der Drehstrommotor (18) ein Asynchron-Drehstrommotor ist.

4. Verfahren nach einem der vorhergehenden Ansprüche,
**dadurch gekennzeichnet,**
**dass** ein Lagegeber (22) den Lenkeinschlag des verdrehten Rades (7) erfasst und die Steuervorrichtung (16) anhand des erfassten Istwerts des Lenkeinschlags, und des Sollwerts des Lenkgebers (10) die Verdrehung des Rades (7) regelt.

5. Verfahren nach Anspruch 4,
**dadurch gekennzeichnet,**
**dass** aus dem errechneten Drehzahlwert über ein Integrationsglied (34) ein errechneter Lagewert (ε_{Modell}) gebildet wird, der mit dem erfassten Lagewert verglichen wird und anhand der Differenz eine Überprüfung der Korrektheit der Steuerung der Lenkvorrichtung erfolgt.

6. Lenkvorrichtung für ein Flurförderzeug mit einem Lenkgeber(10), der beispielsweise als Lenkrad (11) ausgeführt ist, mindestens einem mit einer Fahrbahn in Kontakt stehenden gelenkten Rad (7), einem Drehstrommotor (18) zum Verdrehen des gelenkten Rads (7), einem regelbaren Umrichter (17) für die Versorgung des Drehstrommotors (18) mit elektrischer Energie, Statorstromsensoren zur Messung der Statorströme des Drehstrommotors (18), einem Spannungssensor zur Messung einer Eingangsspannung des Umrichters (17) und einer Steuervorrichtung (16), die in Wirkverbindung mit dem Lenkgeber (10), dem Umrichter (17), den Statorstromsensoren und dem Spannungssensor steht,
wobei die Steuerungsvorrichtung ein Verfahren nach einem der Ansprüche 1 bis 3 durchführt.

7. Lenkvorrichtung für ein Flurförderzeug nach Anspruch 6,
**dadurch gekennzeichnet,**
**dass** ein Lagegeber (22) den Lenkeinschlag des verdrehten Rades (7) erfassen kann und die Steuervorrichtung (16) ein Verfahren nach einem der Ansprüche 4 oder 5 durchführt.

## Claims

1. Method of controlling a steering device for an industrial truck, wherein the steering device has a steering transducer (10), which can be in the form of a steering wheel (11), for example, at least one steered wheel (7) which is in contact with a roadway, a three-phase motor (18) for rotating the steered wheel (7), a controllable converter (17) for supplying electrical energy to the three-phase motor (18), stator current sensors for measuring the stator currents of the three-phase motor (18), a voltage sensor for measuring an input voltage of the converter (17) and a control apparatus (16), which is operatively connected to the steering transducer (10), the converter (17), the stator current sensors and the voltage sensor, wherein in the method, the control apparatus (16) uses a model calculation of the operating response of the three-phase motor (18) to determine the flux vector and the speed (ω_{act}) of the three-phase motor (18) from the stator currents and the input voltage.

2. Method according to Claim 1, **characterized in that** at stator frequencies in the region of around 0, a low-frequency test signal is fed to the three-phase motor (18), and the speed (ω_{act}) is determined from this test signal.

3. Method according to Claim 1 or 2, **characterized in that** the three-phase motor (18) is an asynchronous three-phase motor.

4. Method according to one of the preceding claims, **characterized in that** a position sensor (22) detects the steering angle of the rotated wheel (7) and the control apparatus (16) uses the detected actual value for the steering angle and the setpoint value for the steering transducer (10) for closed-loop control of the rotation of the wheel (7).

5. Method according to Claim 4, **characterized in that** a calculated position value (ε_{model}) is formed from the calculated speed value via an integration element (34), said position value being compared with the detected position value and the correctness of the control of the steering apparatus being checked using the difference.

6. Steering apparatus for an industrial truck comprising a steering transducer (10), which can be in the form of a steering wheel (11), for example, at least one steered wheel (7) which is in contact with a roadway, a three-phase motor (18) for rotating the steered wheel (7), a controllable converter (17) for supplying electrical energy to the three-phase motor (18), stator current sensors for measuring the stator currents of the three-phase motor (18), a voltage sensor for measuring an input voltage of the converter (17) and a control apparatus (16), which is operatively connected to the steering transducer (10), the converter (17), the stator current sensors and the voltage sensor, wherein the control apparatus implements a method according to one of Claims 1 to 3.

7. Steering apparatus for an industrial truck according to Claim 6, **characterized in that** a position sensor (22) can detect the steering angle of the rotated wheel (7), and the control apparatus (16) implements a method according to either of Claims 4 and 5.

## Revendications

1. Procédé de commande d'un dispositif de direction pour un chariot de manutention, dans lequel le dispositif de direction présente un mécanisme de direction (10) qui est réalisé par exemple sous forme d'un volant de direction (11), au moins une roue dirigée (7) en contact avec la chaussée, un moteur triphasé (18) pour la rotation de la roue dirigée (7), un onduleur réglable (17) pour l'alimentation en énergie électrique du moteur triphasé (18), des capteurs de courants statoriques pour mesurer les courants statoriques du moteur triphasé (18), un capteur de tension pour mesurer une tension d'entrée de l'onduleur (17) et un dispositif de commande (16), qui est en liaison fonctionnelle avec le mécanisme de direction (10), l'onduleur (17), les capteurs de mesure de courants statoriques et le capteur de tension, le dispositif de commande (16), dans le procédé, déterminant, à l'aide d'un calcul de modélisation du comportement de fonctionnement du moteur triphasé (18), le vecteur de flux et la vitesse de rotation (ωᵢₛₜ) du moteur triphasé (18) à partir des courants statoriques et de la tension d'entrée.

2. Procédé selon la revendication 1,
**caractérisé en ce que**
dans le cas de fréquences statoriques de l'ordre de 0, un signal d'essai basse fréquence est envoyé au moteur triphasé (18) et à partir de ce signal d'essai la vitesse de rotation (ωᵢₛₜ) est déterminée.

3. Procédé selon la revendication 1 ou 2,
**caractérisé en ce que**
le moteur triphasé (18) est un moteur triphasé asynchrone.

4. Procédé selon l'une quelconque des revendications précédentes,
**caractérisé en ce**
**qu'**un détecteur de position (22) détecte le braquage de direction de la roue tournée (7) et le dispositif de commande (16) régule, à l'aide de la valeur actuelle détectée du braquage de direction et de la valeur de consigne du mécanisme de direction (10), la rotation de la roue (7).

5. Procédé selon la revendication 4,
**caractérisé en ce que**
qu'une valeur de position calculée (ε_{Modell}) est formée à partir de la valeur de la vitesse de rotation calculée par le biais d'un organe d'intégration (34), laquelle valeur de position calculée est comparée avec la valeur de position détectée et un contrôle de la commande correcte du dispositif de direction a lieu à l'aide de la différence.

6. Dispositif de direction pour un chariot de manutention comprenant un mécanisme de direction (10), qui est réalisé par exemple sous forme de volant de direction (11), au moins une roue dirigée (7) en contact avec la chaussée, un moteur triphasé (18) pour la rotation de la roue dirigée (7), un onduleur réglable (17) pour l'alimentation en énergie électrique du moteur triphasé (18), des capteurs de courants statoriques pour mesurer les courants statoriques du moteur triphasé (18), un capteur de tension pour mesurer une tension d'entrée de l'onduleur (17) et un dispositif de commande (16), qui est en liaison fonctionnelle avec le mécanisme de direction (10), l'onduleur (17), les capteurs de mesure de courants statoriques et le capteur de tension, le dispositif de commande (16) mettant en oeuvre un procédé selon l'une quelconque des revendications 1 à 3.

7. Dispositif de direction pour un chariot de manutention selon la revendication 6,
**caractérisé en ce**
**qu'**un détecteur de position (22) peut détecter le braquage de direction de la roue tournée (7) et le dispositif de commande (16) met en oeuvre un procédé selon l'une quelconque des revendications 4 ou 5.
